(19) Europäisches Patentamt
European Patent Office
Office européen des brevets

(11) Numéro de publication : **0 055 164**
**B1**

(12) **FASCICULE DE BREVET EUROPÉEN**

(45) Date de publication du fascicule du brevet : **03.04.85**

(51) Int. Cl.[4] : **B 01 J 21/04**, B 01 J 20/08

(21) Numéro de dépôt : **81401959.2**

(22) Date de dépôt : **09.12.81**

(54) **Procédé de préparation d'agglomérés d'alumine.**

(30) Priorité : **23.12.80 FR 8027299**

(43) Date de publication de la demande :
**30.06.82 Bulletin 82/26**

(45) Mention de la délivrance du brevet :
**03.04.85 Bulletin 85/14**

(84) Etats contractants désignés :
**BE CH DE FR GB IT LI NL**

(56) Documents cités :
**FR-A- 1 190 853**
**FR-A- 1 222 830**
**FR-A- 1 449 904**
**US-A- 2 651 617**
**US-A- 2 774 744**
**US-A- 3 385 663**
**US-A- 3 997 476**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Dupin, Thierry**
**7, rue Robert de Luzarches**
**F-95140 Garges-lès-Gonesse (FR)**
Inventeur : **Lavina, Jean**
**6, rue Maurice Fournier**
**F-30340 Salindres (FR)**
Inventeur : **Poisson, Régis**
**17, avenue de la Cigale**
**F-92600 Asnières (FR)**

(74) Mandataire : **Savina, Jacques et al**
**RHONE-POULENC RECHERCHES Service Brevets Chimie et Polymères 25, quai Paul Doumer**
**F-92408 Courbevoie Cédex (FR)**

**EP 0 055 164 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un procédé de préparation d'agglomérés d'alumine à porosité contrôlée présentant des résistances mécaniques, thermiques et hydrothermiques exceptionnelles.

On connaît d'après le brevet américain n° 2 651 617 un procédé de régénération d'un catalyseur composite comportant de l'alumine par chauffage du catalyseur usagé dans un milieu contenant une proportion majeure d'acide acétique et une proportion mineure d'acide chlorhydrique à une température comprise entre 200 et 250 °C environ. Ce procédé réduit la densité du catalyseur usé par enlèvement d'une portion d'alumine contenue dans le composite traité pour produire une particule poreuse. Les acides sont mis en œuvre sous forme concentrée (au moins 60 % en poids).

On connaît, d'après le brevet français n° 1 222 830 un procédé de fabrication de supports en alumine pour catalyseurs comportant le traitement à une température inférieure à 80 °C en milieu acide concentré de l'alumine afin d'en dissoudre une partie qui est ensuite éliminée sous forme de chlorure d'aluminium par lavage à l'eau.

Il est également connu, d'après le brevet français n° 1 386 364 au nom de la demanderesse de préparer des agglomérés d'alumine possédant une grande solidité mécanique. Selon le procédé décrit dans ce brevet, on traite des agglomérés d'alumine active à l'autoclave en présence d'eau, on les sèche puis on les calcine à la température correspondant à la surface spécifique et à la dimension de pore désirée.

Selon les brevets américains n° 3 628 914 et 3 480 389 également au nom de la demanderesse, il est connu de préparer des agglomérés d'alumine de résistance mécanique encore plus élevée que celle obtenue selon le brevet français n° 1 386 364 en traitant des agglomérés d'alumine active par un acide à l'autoclave.

Poursuivant ses travaux, la demanderesse a été conduite à mettre au point un procédé qui permet d'obtenir des agglomérés d'alumine présentant une porosité contrôlée jointe à des résistances mécaniques (attrition, écrasement) exceptionnelles, ces agglomérés d'alumine possèdent également une excellente solidité mécanique aux températures élevées éventuellement en présence de vapeur d'eau, donc une stabilité thermique et hydrothermique particulièrement intéressante. Le procédé mis au point n'entraîne aucune perte d'alumine contrairement à ceux décrits dans le brevet américain n° 2 651 617 et le brevet français n° 1 222 830.

Ces agglomérés d'alumine peuvent être utilisés comme catalyseurs ou supports de catalyseurs dans toutes les réactions qui nécessitent une structure de pores particulière jointe à des propriétés mécaniques, thermiques et hydrothermiques très élevées et en particulier pour le traitement des gaz d'échappement des moteurs à combustion interne, l'hydrodésulfuration, l'hydrodémétallation, l'hydrodénitrification et, d'une manière générale, les hydrotraitements des produits pétroliers.

Le procédé selon la présente invention concerne en effet un procédé de préparation d'agglomérés d'alumine à porosité contrôlée et présentant des résistances mécanique, thermique et hydrothermique exceptionnelles et comportant les étapes suivantes :

a) On traite des agglomérés d'alumine active dans un milieu aqueux constitué d'un mélange d'au moins un acide permettant de dissoudre au moins une partie de l'alumine des agglomérés et d'au moins un composé apportant un anion capable de se combiner avec les ions aluminium en solution.

b) On soumet simultanément ou subséquemment les agglomérés ainsi traités à un traitement à une température comprise entre environ 80 °C et environ 250 °C pendant une période comprise entre environ quelques minutes et environ 36 h.

c) On sèche éventuellement les agglomérés et on les soumet à une activation thermique à une température comprise entre environ 500 °C et environ 1 100 °C.

Le procédé est caractérisé en ce que l'acide dissout au moins 0,5 % et au plus 15 % en poids d'alumine des agglomérés, l'acide étant choisi parmi les acides forts ou les acides faibles, sa concentration dans le milieu aqueux de traitement étant inférieure à 20 % en poids et de préférence comprise entre 1 % et 15 % et en ce que le composé apportant un anion $A^{-n}$ forme avec les ions aluminium $Al^{3+}$ en solution des produits dans lesquels le rapport atomique $n(A/Al) \leqslant 3$, la concentration de ce composé dans le milieu aqueux de traitement est inférieure à 50 % en poids et de préférence comprise entre 3 % et 30 %.

Les agglomérés d'alumine active mis en œuvre selon la présente invention sont préparés à partir d'une poudre d'alumine active présentant une structure mal cristallisée et/ou amorphe par exemple obtenue selon le procédé tel que décrit dans le brevet français n° 1438 497. Ce procédé consiste à humecter à l'aide d'une solution aqueuse l'alumine active présentant une structure mal cristallisée et/ou amorphe, à l'agglomérer, à faire mûrir les agglomérés obtenus en atmosphère humide à température peu élevée, de préférence comprise entre environ 60 et environ 100 °C, à sécher puis à calciner ces agglomérés à une température comprise entre environ 250 °C et environ 900 °C.

Au sens de ce procédé, on entend par alumine de structure mal cristallisée, une alumine telle que l'analyse aux rayons X donne un diagramme ne présentant qu'une ou quelques raies diffuses correspondant aux phases cristallines des alumines de transition basse température et comportant essentiellement les phases chi, rho, êta, gamma, pseudogamma et leurs mélanges.

On entend par alumine de structure amorphe, une alumine telle que son analyse aux rayons X ne décèle aucune raie caractéristique d'une phase cristalline quelconque.

L'alumine active mise en œuvre est généralement obtenue par déshydratation rapide des hydroxydes d'aluminium tels que la bayerite, l'hydrargillite ou gibbsite, la nordstrandite ou des oxyhydroxydes d'aluminium tels que la boehmite et le diaspore. Cette déshydratation peut être opérée dans n'importe quel appareillage approprié à l'aide d'un courant de gaz chaud. La température d'entrée des gaz dans l'appareillage varie généralement de 400 à 1 200 °C environ et le temps de contact de l'hydroxyde ou de l'oxyhydroxyde avec les gaz chauds est généralement compris entre une fraction de seconde et 4 à 5 secondes.

La surface spécifique mesurée par la méthode BET de l'alumine active obtenue par déshydratation rapide d'hydroxydes ou d'oxyhydroxydes varie généralement entre environ 50 et 400 $m^2/g$, le diamètre des particules est généralement compris entre 0,1 et 300 microns et de préférence entre 1 et 120 microns. La perte au feu mesurée par calcination à 1 000° varie généralement entre 3 et 15 %, ce qui correspond à un rapport molaire $H_2O/Al_2O_3$ compris entre environ 0,17 et 0,85.

Selon un mode de mise en œuvre particulier on utilise de préférence une alumine active provenant de la déshydratation rapide de l'hydrate Bayer (hydrargillite) qui est l'hydroxyde d'aluminium industriel facilement accessible et très bon marché ; une telle alumine active est bien connue de l'homme de l'art, son procédé de préparation a notamment été décrit dans le brevet français n° 1 108 011.

L'alumine active mise en œuvre peut être utilisée telle quelle ou avoir été traitée de façon à ce que sa teneur en soude exprimée en $Na_2O$ soit inférieure à 1 000 parties par million. L'alumine active mise en œuvre peut avoir été broyée ou non.

L'agglomération de l'alumine active est réalisée selon les méthodes bien connues de l'homme de l'art et, en particulier, par pastillage, extrusion, mise en forme sous forme de billes au drageoir tournant, etc...

Cette agglomération peut avoir été effectuée, ainsi qu'il est bien connu de l'homme de l'art, en ajoutant des agents porogènes au mélange à agglomérer. Les agents porogènes que l'on peut utiliser sont notamment la farine de bois, le charbon de bois, la cellulose, les amidons, la naphtaline et, d'une manière générale tous les composés organiques susceptibles d'être éliminés par calcination.

On opère ensuite, le cas échéant, le mûrissement, le séchage et/ou la calcination des agglomérés.

Les agglomérés d'alumine active mis en œuvre selon le procédé de l'invention présentent généralement les caractéristiques suivantes : leur perte au feu mesurée par calcination à 1 000 °C est comprise entre environ 1 et environ 15 %, leur surface spécifique est comprise entre environ 100 et environ 350 $m^2/g$, leur volume poreux total est compris entre environ 0,45 et environ 1,2 $cm^3/g$.

Les agglomérés d'alumine active sont traités selon l'invention dans un milieu aqueux constitué d'un mélange d'au moins un acide permettant de dissoudre au moins une partie de l'alumine des agglomérés et d'au moins un composé apportant un anion capable de se combiner avec les ions aluminium en solution.

Au sens de l'invention, on entend par acide permettant de dissoudre au moins une partie de l'alumine des agglomérés tout acide qui, mis en contact avec les agglomérés d'alumine active définis ci-dessus, réalise la mise en solution d'au moins une partie des ions aluminium. L'acide doit dissoudre au moins 0,5 % et au plus 15 % en poids d'alumine des agglomérés. Sa concentration dans le milieu aqueux de traitement doit être inférieure à 20 % en poids et de préférence comprise entre 1 % et 15 %.

On utilisera de préférence les acides forts tels que l'acide nitrique, l'acide chlorhydrique, l'acide perchlorique, l'acide sulfurique ou des acides faibles mis en œuvre à une concentration telle que leur solution aqueuse présente un pH inférieur à environ 4.

Au sens de l'invention, on entend par composé apportant un anion capable de se combiner avec les ions aluminium en solution, tout composé capable de libérer en solution un anion $A^{-n}$ susceptible de former avec les cations $Al^{3+}$ des produits dans lesquels le rapport atomique $n(A/Al) \leqslant 3$.

Un cas particulier de ces composés peut être illustré par les sels basiques de formule générale $Al_2(OH)_xA_y$ dans laquelle $O < x < 6$ ; $n y < 6$ ; n représente le nombre de charges de l'anion A.

La concentration de ce composé dans le milieu aqueux de traitement doit être inférieure à 50 % en poids et de préférence comprise entre 3 % et 30 %.

On utilise de préférence les composés capables de libérer en solution les anions choisis parmi le groupe constitué par les anions nitrate, chlorure, sulfate, perchlorate, chloroacétate, dichloracétate, trichloracétate, bromoacétate, dibromoacétate et les anions de formule générale

$$R-\overset{\overset{O}{\|}}{C}-O^-$$

dans laquelle R représente un radical pris dans le groupe comprenant H, $CH_3$, $C_2H_5$, $CH_3CH_2CH_2$, $(CH_3)_2CH$.

Les composés capables de libérer en solution l'anion $A^{-n}$ peuvent opérer cette libération, soit directement par exemple par dissociation, soit indirectement par exemple par hydrolyse. Les composés peuvent notamment être choisis parmi le groupe comportant : les acides minéraux ou organiques, les anhydrides, les sels organiques ou minéraux, les esters. Parmi les sels minéraux, on peut citer les sels alcalins ou alcalino-terreux solubles en milieu aqueux, comme ceux de sodium, de potassium, de magnésium ou de calcium, les sels d'ammonium, les sels d'aluminium, les sels de terres rares.

Ce premier traitement peut être effectué soit par imprégnation à sec des agglomérés, soit par immersion des agglomérés dans la solution aqueuse constituée du mélange selon l'invention. Par imprégnation à sec, on entend mise en contact des agglomérés d'alumine avec un volume de solution inférieure ou égale au volume poreux total des agglomérés traités.

Selon un mode de mise en œuvre particulièrement préféré de l'invention, on utilisera comme milieu aqueux des mélanges d'acide nitrique et acétique ou d'acide nitrique et formique.

On soumet simultanément ou subséquemment les agglomérés ainsi traités à un traitement à une température comprise entre environ 80 et environ 250 °C pendant une période de temps comprise entre environ quelques minutes et environ 36 h.

Ce traitement hydrothermique n'entraîne aucune perte d'alumine.

On opère de préférence à une température comprise entre 120 et 220 °C pendant une période de temps comprise entre 15 minutes et 18 heures.

Ce traitement constitue un traitement hydrothermal des agglomérés d'alumine active qui réalise la transformation d'au moins une partie de ceux-ci en boehmite. Ce traitement hydrothermal peut être réalisé soit sous pression de vapeur saturante, soit sous une pression partielle de vapeur d'eau au moins égale à 70 % de la pression de vapeur saturante correspondant à la température de traitement.

Sans limiter la présente invention à la théorie, on peut penser que l'association d'un acide qui permet la dissolution d'au moins une partie de l'alumine et d'un anion qui permet la formation des produits décrits ci-dessus lors du traitement hydrothermal entraînent l'obtention d'une boehmite particulière qui confère aux agglomérés calcinés notamment leur excellente résistance thermique et hydrothermique.

De plus, la concentration de l'acide et du composé dans le mélange de traitement et les conditions de traitement hydrothermal mises en œuvre sont telles qu'il n'y a pas de perte d'alumine. L'augmentation de la porosité à la suite du traitement est donc due à une expansion des agglomérés au cours du traitement et non à une perte d'alumine.

Les agglomérés ainsi traités sont ensuite éventuellement séchés à une température généralement comprise entre environ 100 et 200 °C pendant une période de temps suffisante pour enlever l'eau qui n'est pas chimiquement liée. Les agglomérés sont ensuite soumis à une activation thermique à une température comprise entre environ 500 °C et 1 100 °C pendant une période de temps comprise entre environ 15 mn et 2 heures.

Les opérations d'activation peuvent se faire en plusieurs étapes. On opérera de préférence une activation à une température comprise entre environ 550 et 950 °C. Selon la température d'activation les agglomérés d'alumine présentent, de façon prédominante, la structure cristalline caractéristique de leur filiation boehmitique.

Les agglomérés d'alumine active obtenus selon le procédé de l'invention présentent les caractéristiques suivantes :

Une densité de remplissage tassé (DRT) comprise entre environ 0,36 et environ 0,75 g/cm$^3$. Cette DRT est mesurée de la façon suivante : on introduit un poids donné d'agglomérés dans une éprouvette graduée pour contenir les agglomérés dans un volume donné. On fait ensuite vibrer l'éprouvette jusqu'à la fin de tout tassement et jusqu'à l'obtention d'un volume constant. On calcule ensuite le poids d'aggloméré qui occupe un volume unité.

Un volume poreux total (VPT) compris entre environ 0,35 et environ 1,50 cm$^3$/g. Ce VPT est mesuré de la façon suivante : on détermine la valeur de la densité de grain et de la densité absolue ; les densités de grain (Dg) et absolue (Da) sont mesurées par la méthode de picnométrie respectivement au mercure et à l'hélium ; le VPT est donné par la formule

$$VPT = (1/Dg) - (1/Da)$$

Une répartition des volumes poreux suivant la taille des pores (REP) telle que :

| Ø en $10^{-10}$ m | < 100 | 100 - 1000 | 1000 - 5000 | 5000 - 10000 | > 10000 |
|---|---|---|---|---|---|
| V cm$^3$/g | 0 - 0,10 | 0,40 - 0,90 | 0 - 0,60 | 0 - 0,55 | 0 - 0,40 |

Ø représente le diamètre des pores et V le volume des pores ayant un diamètre compris entre les limites indiquées.

La REP dans l'aggloméré est déterminée par la technique de la pénétration du mercure dans laquelle on applique la loi de Kelvin qui donne la relation entre la pression, le diamètre du plus petit pore dans lequel le mercure pénètre à ladite pression, l'angle de mouillage et la tension superficielle, selon la formule

$$Ø = (4\,t \cos \theta)/P$$

dans laquelle

Ø représente le diamètre du pore

t la tension superficielle

θ l'angle de contact

p la pression.

Une surface spécifique (SBE) mesurée par la méthode B.E.T. comprise entre environ 80 et environ 200 $m^2g^{-1}$.

Une solidité mécanique (EGG) comprise entre environ 2 et environ 20 kg.

La solidité mécanique est mesurée par la méthode d'écrasement grain à grain (EGG). Elle consiste à mesurer la forme de compression maximale que peut supporter un granulé avant sa rupture, lorsque le produit est placé entre deux plans se déplaçant à la vitesse constante de 5 cm/mn. Dans le cas particulier de sphères, la force sera exprimée en kilogrammes.

Dans le cas particulier des extrudés ou des pastilles, la compression est appliquée perpendiculairement à l'une des génératrices du produit, et l'écrasement grain à grain sera exprimé comme le rapport de la force à la longueur de la génératrice et sera donc en kilogrammes/mm.

La solidité mécanique (EGG) est reliée au volume poreux total (VPT) par la loi de Schiller : EGG = A Log B/($D_g$ × VPT) dans laquelle A et B sont des constantes. Ainsi lorsque la porosité (VPT) augmente l'EGG diminue, il est donc difficile de fabriquer des produits à la fois poreux et solides.

Une résistance à l'attrition (RA) supérieure à environ 98 %. La résistance à l'attrition est mesurée par le pourcentage de produit non usé par frottement selon la méthode suivante : on introduit un volume donné (60 $cm^3$) d'aggloméré dans un erlenmeyer renversé de construction particulière qui est raccordé à un orifice d'entrée métallique. Sur le fond de l'erlenmeyer on place un grand orifice de sortie (2,54 cm) recouvert d'un tamis de 1,168 mm d'ouverture. On envoie par l'orifice d'ouverture un fort courant d'azote sec qui a deux fonctions, d'une part de faire circuler les agglomérés les uns contre les autres, ce qui entraîne leur usure par frottement, d'autre part de provoquer le choc des agglomérés contre l'erlenmeyer, ce qui entraîne leur dégradation selon l'intensité du choc. Le produit est testé pendant 5 minutes et on pèse le poids des agglomérés restants. La diminution de poids après l'essai exprimé en % de la charge initiale représente la résistance à l'attrition RA.

Un retrait (Rt) après traitement thermique 24 h sous air sec à 982 °C et 1 093 °C inférieur à 2 %. Le retrait est mesuré par le pourcentage de la diminution de volume des agglomérés obtenu de la façon suivante : on introduit une quantité donnée d'agglomérés dans une éprouvette graduée et on la fait vibrer jusqu'à la fin de tout tassement et jusqu'à l'obtention d'un volume constant comme dans le cas de la mesure de la DRT. Les agglomérés sont ensuite traités thermiquement sous air sec pendant 24 h soit à 982 °C soit à 1 093 °C. On mesure ensuite à nouveau le volume des agglomérés après vibration et on calcule la diminution de volume après traitement thermique, par rapport au volume initial, que l'on exprime en % de la diminution de volume.

Par ailleurs, les agglomérés selon l'invention présentent d'excellentes propriétés après traitement thermique ou hydro thermique.

Après traitement thermique à 982 °C (TT 982 °C) pendant 24 heures sous air sec, leurs caractéristiques sont les suivantes :

SBE > 60 $m^2/g$

EGG compris entre 2 et 20 kg

RA > 98 %

Rt < 2 %

Après traitement thermique à 1 093 °C (TT 1 093 °C) pendant 24 heures sous air sec, les agglomérés selon l'invention qui ont été stabilisés préalablement selon le procédé décrit dans le brevet américain n° 4 061 594 au nom de la demanderesse présentent les caractéristiques suivantes :

SBE > 50 $m^2/g$

EGG compris entre 2 et 20 kg

RA > 98 %

Après traitement hydrothermique à 900 °C (TT $H_2O$, 900 °C) pendant 24 heures sous azote avec 10 % de vapeur d'eau, les agglomérés selon l'invention présentent les caractéristiques suivantes :

SBE > 60 $m^2/g$

EGG compris entre 2 et 20 kg

RA > 98 %

Des propriétés qui viennent d'être données, il apparaît clairement que le procédé selon l'invention permet d'obtenir des agglomérés d'alumine active qui possèdent d'excellentes propriétés mécanique, thermique et hydrothermique et une répartition de pore très facilement réglable dans une gamme particulièrement étendue.

Le procédé selon la présente invention permet notamment et de façon totalement inattendue de modifier la répartition des volumes poreux suivant la taille des pores des agglomérés non traités. Il permet notamment d'augmenter la proportion des pores compris entre 100 et 1 000 $10^{-10}$ m, de réduire la proportion des pores inférieure à 100 $10^{-10}$ m et de diminuer la proportion des pores supérieurs à 5 000 et/ou 10 000 $10^{-10}$ m en modifiant peu la proportion des pores compris entre 1 000 et 5 000 $10^{-10}$ m. Le procédé selon la présente invention permet ainsi d'obtenir à son gré des produits microporeux et/ou macroporeux présentant des propriétés exceptionnelles.

Les agglomérés d'alumine obtenus selon la présente invention peuvent être employés comme catalyseurs ou supports de catalyseurs.

Lorsque leurs conditions d'utilisation le nécessitent, ils peuvent avoir été thermiquement stabilisés par les terres rares, la silice ou les métaux alcalino-terreux ainsi qu'il est bien connu de l'homme de l'art. En particulier, ils peuvent être stabilisés selon le procédé décrit dans le brevet américain n° 4 061 594 au nom de la demanderesse.

Les agglomérés selon l'invention sont notamment utilisables comme supports de catalyseurs dans les procédés mettant en œuvre des réactions très rapides à forte limitation diffusionnelle interne et dans les réactions conduisant à un empoisonnement progressif du catalyseur ; dans ce cas, les agglomérés de l'invention à structure de pores bimodale (c'est-à-dire comportant des micropores et des macropores) sont particulièrement efficaces, les impuretés étant piégées dans les macropores tandis que la microporosité reste active catalytiquement. Les agglomérés convenant particulièrement bien à cette fin ont notamment une répartition de pore telle que : le volume de pore de diamètre supérieur à 10 000 $10^{-10}$ m est supérieur à 0,10 $m^3/g$, le volume de pore de diamètre compris entre 1 000 $10^{-10}$ m et 10 000 $10^{-10}$ m est compris entre 0,10 et 0,15 $cm^3/g$, le volume de pore de diamètre compris entre 100 et 1 000 $10^{-10}$ m est compris entre 0,50 et 0,80 $cm^3/g$, le volume de pore de diamètre inférieur à 100 $10^{-10}$ m est inférieur à 0,05 $cm^3/g$.

Les agglomérés d'alumine active de l'invention peuvent ainsi, notamment, être utilisés comme support de catalyseur dans le traitement des gaz d'échappement des moteurs à combustion interne ; dans tous les hydrotraitements des produits pétroliers comme l'hydrodésulfuration, l'hydrodémétallation, l'hydrodénitrification. Ils peuvent également être utilisés comme supports de catalyseurs dans les réactions de récupération du soufre à partir de composés soufrés (catalyse Claus), la déshydratation, le reformage, le reformage à la vapeur, la déshydrohalogénation, l'hydrocraquage, l'hydrogénation, la déshydrogénation, la déshydrocyclisation d'hydrocarbures ou autres composés organiques, les réactions d'oxydation et de réduction.

Lorsque les agglomérés obtenus selon le procédé de la présente invention sont utilisés comme support de catalyseurs pour le traitement des gaz d'échappement des moteurs à combustion interne, la phase active de celui-ci peut avantageusement être celle décrite dans le brevet français n° 79 24 675 au nom de la demanderesse.

Les exemples donnés ci-après illustrent l'invention sans en limiter la portée. Dans ceux-ci les caractéristiques données pour les billes ont été mesurées et sont notées selon ce qui a été exposé ci-dessus.

## Exemple 1

On traite 4 kg de billes d'alumine obtenues selon le procédé décrit dans le brevet français n° 1 438 497 dans un réacteur de 10 litres. Ces billes présentent les caractéristiques suivantes :

EGG : 1,0 kg
SBE : 192 $m^2g^{-1}$
VPT : 0,84 $cm^3/g$
REP :

| Ø $10^{-10}$ m | < 100 | 100 - 1000 | 1000 - 5000 | 5000 - 10000 | >10000 |
|---|---|---|---|---|---|
| V $cm^3/g$ | 0,06 | 0,40 | 0,05 | 0,05 | 0,28 |

Le traitement est effectué en phase vapeur à une température de 195 °C pendant un temps de 3 heures. Le milieu de traitement est constitué par un mélange d'acide nitrique de concentration 7 g pour 100 g $Al_2O_3$ et d'acide acétique de concentration 10 g pour 100 g $Al_2O_3$. L'acide nitrique permet de dissoudre environ 2,5 % en poids des billes d'alumine. L'acide acétique apporte l'anion acétate qui se combine avec les ions aluminium en solution pour former des composés dans lesquels le rapport atomique CH3COO/Al sera inférieur à 3.

Les billes ainsi traitées sont activées thermiquement dans un four à 900 °C pendant 1 heure.

Les propriétés des billes obtenues sont testées selon les 5 méthodes qui ont été décrites ci-dessus. Elles présentent les caractéristiques suivantes :

DRT : 0,44 g/$cm^3$
VPT : 1,05 $cm^3$/g
REP :

| Ø $10^{-10}$ m | < 100 | 100 - 1000 | 1000 - 5000 | 5000 - 10000 | > 10000 |
|---|---|---|---|---|---|
| V $cm^3$/g | 0,01 | 0,68 | 0,10 | 0,07 | 0,19 |

SBE : 107 $m^2g^{-1}$
EGG : 3,6 kg
RA : 99,7 %
TT 982 °C :
SBE : 75 $m^2g^{-1}$
EGG : 3,3 kg
RA : 99,6 %
Rt : 0,8 %
TT 1 093 °C :
SBE : 71 $m^2g^{-1}$
EGG : 3,8 kg
RA : 99,7 %
TT $H_2O$ 900 °C :
SBE : 84 $m^2g^{-1}$
EGG : 3,4 kg
RA : 99,4 %

Ces billes présentent donc des propriétés mécaniques, thermiques et hydrothermiques exceptionnelles. Le traitement réalisé a permis de façon totalement inattendue d'augmenter simultanément la solidité et le volume poreux des billes. Cette contradiction apparente avec la loi de Schiller peut s'expliquer par une modification des constantes A et B dues au traitement effectué. De plus, le traitement a permis d'éliminer presque entièrement les pores de diamètre inférieur à 100 $10^{-10}$ m, d'augmenter la quantité de pores de diamètre compris entre 100 et 1 000 et $10^{-10}$ m, et de diminuer légèrement la quantité de pores de diamètre supérieur à 10 000 $10^{-10}$ m.

Exemple 2

On traite 4 kg de billes d'alumine obtenues selon le procédé décrit dans le brevet français n° 1 438 497 dans un réacteur de 10 litres. Ces billes présentent les caractéristiques suivantes :

SBE : 135 $m^2g^{-1}$
VPT : 0,82 $cm^3g^{-1}$
REP :

| Ø $10^{-10}$ m | < 100 | 100 - 1000 | 1000 - 5000 | 5000 - 10000 | >10000 |
|---|---|---|---|---|---|
| V $cm^3$/g | 0,06 | 0,48 | 0,04 | 0,03 | 0,21 |

Le traitement est effectué en phase vapeur à une température de 151 °C pendant un temps de 15 heures. Le milieu de traitement est constitué par un mélange d'acide nitrique de concentration 7 g/100 g $Al_2O_3$ et d'acide formique de concentration 6 g/100 g $Al_2O_3$. L'acide nitrique permet de dissoudre environ 2,5 % des billes d'alumine. L'acide formique apporte l'anion formate qui se combine avec les ions aluminium en solution pour former des composés dans lesquels le rapport atomique HCOO/Al sera inférieur à 2,5.

Les billes ainsi traitées sont activées thermiquement dans un four à 900 °C pendant 1 heure.

Les propriétés des billes obtenues sont testées selon les méthodes qui ont été décrites ci-dessus. Elles présentent les caractéristiques suivantes :

DRT : 0,49 g/$cm^3$
VPT : 0,91 $cm^3$/g
REP :

| Ø $10^{-10}$ m | < 100 | 100 - 1000 | 1000 5000 | 5000 10000 | > 10000 |
|---|---|---|---|---|---|
| V $cm^3$/g | 0,02 | 0,57 | 0,04 | 0,11 | 0,17 |

SBE : 115 $m^2g^{-1}$
EGG : 4,7 kg
RA : 99,4 %
TT 982 °C :
- SBE : 68 $m^2g^{-1}$
- EGG : 4,2 kg
- RA : 99,6 %
- Rt : 1,1 %

TT 1 093 °C :
- SBE : 65 $m^2g^{-1}$
- EGG : 4,4 kg.
- RA : 99,3 %

TT $H_2O$ 900 °C :
- SBE : 69 $m^2g^{-1}$
- EGG : 4,5 kg
- RA : 99,3 %

Exemple 3

On a reproduit l'essai donné à l'exemple 1 en modifiant seulement les caractéristiques des billes de départ qui sont les suivantes :

SBE : 257 $m^2g^{-1}$
VPT : 0,54 $cm^3$
REP : < 100 = 0,49 $cm^3$/g, 100 – 1 000 = 0,05 $cm^3$/g

Les billes obtenues après le traitement décrit à l'exemple 1 présentent les caractéristiques suivantes :

DRT : 0,53 g/$cm^3$
VPT : 0,82 $cm^3$/g
REP :

| Ø $10^{-10}$ m | < 100 | 100 1000 | 1000 5000 | 5000 - 10000 | >10000 |
|---|---|---|---|---|---|
| V $cm^3$/g | 0,02 | 0,66 | 0,10 | 0,04 | 0 |

SBE : 103 $m^2g^{-1}$
EGG : 14 kg
RA : 99,8 %
TT 982 °C :
- SBE : 69 $m^2g^{-1}$
- EGG : 13,2 kg
- RA : 99,6 %
- Rt : 0,9 %

TT 1 093 °C :
SBE : 66 $m^2g^{-1}$
EGG : 13,7 kg
RA : 99,4 %
TT $H_2O$ 900 °C :
SBE : 75 $m^2g^{-1}$
EGG : 12,5 kg
RA : 99,3 %

Ces billes présentent donc des propriétés mécaniques, thermiques et hydrothermiques exceptionnelles. Le traitement réalisé a permis d'augmenter considérablement le volume poreux total et en particulier le volume poreux correspondant à des pores ayant un diamètre compris entre 100 et 1 000 $10^{-10}$ m et ce traitement a fait apparaître des pores ayant un diamètre compris entre 1 000 et 10 000 $10^{-10}$ m.

Exemple 4

On a reproduit l'essai donné à l'exemple 1 en modifiant seulement les conditions de traitement (température et temps) des billes dans le milieu ; les caractéristiques des billes obtenues et les conditions de traitement sont données dans le tableau I ci-après.

(Voir Tableau I page suivante)

Tableau I

| CONDITIONS DE TRAITEMENT | | Temps en heures | 2 | 3 | 4 | 6 | 0,5 |
|---|---|---|---|---|---|---|---|
| | | T. en °C | 195 | 195 | 195 | 195 | 215 |
| CARACTERISTIQUES DES BILLES OBTENUES | DRT ($g/cm^3$) | | 0,48 | 0,44 | 0,43 | 0,39 | 0,44 |
| | VPT ($cm^3/g$) | | 0,93 | 1,05 | 1,09 | 1,24 | 1,04 |
| | REP < 100 $10^{-10}$m | | 0,01 | 0,01 | 0,00 | 0 | 0,01 |
| | 100 1000 $10^{-10}$m | | 0,61 | 0,68 | 0,72 | 0,86 | 0,70 |
| | 1000 - 5000 $10^{-10}$m | | 0,07 | 0,10 | 0,12 | 0,10 | 0,08 |
| | 5000 - 10000 $10^{-10}$m | | 0,05 | 0,07 | 0,08 | 0,09 | 0,07 |
| | > 10000 $10^{-10}$m | | 0,19 | 0,19 | 0,17 | 0,19 | 0,18 |
| | SBE ($m^2g^{-1}$) | | 108 | 107 | 106 | 103 | 105 |
| | EGG (kg) | | 4,0 | 3,6 | 3,6 | 3,2 | 3,8 |
| | RA (%) | | 99,5 | 99,7 | 99,7 | 99,6 | 99,6 |
| | TT 982°C | SBE ($m^2g^{-1}$) | 71 | 75 | 73 | 69 | 74 |
| | | EGG (kg) | 3,8 | 3,3 | 3,4 | 3,0 | 3,5 |
| | | RA (%) | 99,4 | 99,6 | 99,6 | 99,3 | 99,4 |
| | | Rt (%) | 1,2 | 0,8 | 0,7 | 0,5 | 0,7 |
| | TT 1093°C | SBE ($m^2$g-1) | 67 | 71 | 69 | 65 | 69 |
| | | EGG (kg) | 3,8 | 3,8 | 3,4 | 3,1 | 3,7 |
| | | RA (%) | 99,3 | 99,7 | 99,6 | 99,2 | 99,6 |
| | TT $H_2O$,900°C | SBE ($m^2g^{-1}$) | 69 | 84 | 88 | 89 | 86 |
| | | EGG (kg) | 3,9 | 3,4 | 3,5 | 3,1 | 3,5 |
| | | RA (%) | 99,3 | 99,4 | 99,5 | 99,5 | 99,4 |

Le procédé selon l'invention permet ainsi notamment, en modifiant le temps de traitement des billes de régler à volonté le volume poreux total, le volume poreux correspondant aux pores de diamètre compris entre 100 et 1 000 $10^{-10}$ m, sans influencer significativement les propriétés mécaniques, thermiques et hydrothermiques des billes obtenues.

Exemple 5

On a reproduit l'essai donné à l'exemple 1 en modifiant seulement le milieu de traitement des billes d'alumine ; les caractéristiques des billes obtenues et le milieu de traitement sont données dans le tableau II ci-après.

Tableau II

| | | | | |
|---|---|---|---|---|
| Milieu de traitement | Acide ($H^+$) Concentration en poids pour $100g/Al_2O_3$ | $CH_3COOH$ 15 % | HCl 4 % | $HNO_3$ 7 % |
| | Composé ($A^-$) Concentration poids pour $100g/Al_2O_3$ | $(NH_4)_2SO_4$ 12 % | $(CH_3CO)_2O$ 5 % | $CH_3COOCH_3$ 6 % |
| CARACTERISTIQUES DES BILLES OBTENUES | DRT ($g/cm^3$) | 0,47 | 0,45 | 0,45 |
| | VPT ($cm^3/g$) | 0,97 | 1,02 | 1,03 |
| | REP < 100 $10^{-10}m$ | 0,01 | 0,01 | 0,01 |
| | 100 - 1000 $10^{-10}m$ | 0,62 | 0,66 | 0,67 |
| | 1000 - 5000 $10^{-10}m$ | 0,07 | 0,08 | 0,08 |
| | 5000 - 10000 $10^{-10}m$ | 0,06 | 0,08 | 0,08 |
| | > 10000 $10^{-10}m$ | 0,21 | 0,19 | 0,19 |
| | SBE ($m^2g^{-1}$) | 109 | 111 | 113 |
| | EGG (kg) | 4,1 | 3,9 | 3,9 |
| | RA (%) | 99,8 | 99,6 | 99,7 |
| | TT 982°C SBE ($m^2g^{-1}$) | 81 | 76 | 78 |
| | EGG (kg) | 4,0 | 3,8 | 3,5 |
| | RA (%) | 99,6 | 99,4 | 99,7 |
| | Rt (%) | 0,4 | 0,8 | 0,7 |
| | TT 1093°C SBE ($m^2g^{-1}$) | 71 | 71 | 72 |
| | EGG (kg) | 3,8 | 3,6 | 3,6 |
| | RA (%) | 99,3 | 99,4 | 99,6 |
| | TT $H_2O$,900°C SBE ($m^2g^{-1}$) | 88 | 84 | 83 |
| | EGG (kg) | 3,8 | 3,7 | 3,5 |
| | RA (%) | 99,5 | 99,5 | 99,4 |

Exemple 6

On a reproduit l'essai donné à l'exemple 1 en modifiant seulement les conditions de l'activation thermique (température, temps), des billes après leur traitement.

Les caractéristiques des billes obtenues et les conditions d'activation thermique sont données dans le tableau III ci-après.

Tableau III

| ACTIVATION THERMIQUE | | | | |
|---|---|---|---|---|
| | T. en °C | 600°C | 900°C | 1000°C |
| | Temps en heures | 2 h | 1 h | 1 h |
| CARACTERISTIQUES DES BILLES OBTENUES | DRT ($g/cm^3$) | 0,46 | 0,44 | 0,44 |
| | VPT ($cm^3/g$) | 1,00 | 1,05 | 1,05 |
| | REP < 100 $10^{-10}$m | 0,03 | 0,01 | 0,00 |
| | 100 1000 $10^{-10}$ | 0,64 | 0,68 | 0,69 |
| | 1000 - 5000 $10^{-10}$m | 0,08 | 0,10 | 0,09 |
| | 5000 - 10000 $10^{-10}$m | 0,08 | 0,07 | 0,06 |
| | > 10000 $10^{-10}$m | 0,17 | 0,19 | 0,21 |
| | SBE ($m^2g^{-1}$) | 185 | 107 | 92 |
| | EGG (kg) | 3,8 | 3,6 | 3,6 |
| | RA (%) | 99,7 | 99,7 | 99,7 |
| | TT 982°C SBE ($m^2g^{-1}$) | 75 | 75 | 75 |
| | EGG (kg) | 3,3 | 3,3 | 3,3 |
| | RA (%) | 99,6 | 99,6 | 99,6 |
| | Rt (%) | 0,8 | 0,8 | 0,8 |
| | TT 1093°C SBE($m^2g^{-1}$) | 71 | 71 | 71 |
| | EGG (kg) | 3,8 | 3,8 | 3,8 |
| | RA (%) | 99,7 | 99,7 | 99,7 |
| | TT $H_2O$,900°C SBE($m^2g^{-1}$) | 84 | 84 | 84 |
| | EGG (kg) | 3,4 | 3,4 | 3,4 |
| | RA (%) | 99,4 | 99,4 | 99,4 |

Exemple 7

Cet exemple donné à titre comparatif illustre le procédé de traitement décrit dans les brevets américains N° 3 628 914 et N° 3 480 389.

On opère comme dans l'exemple 1 en utilisant comme milieu de traitement, soit de l'acide nitrique seul, soit de l'acide acétique seul, soit de l'acide formique seul.

Tableau IV

| | MILIEU DE TRAITEMENT | Acide nitrique seul | Acide acétique seul | Acide formique seul |
|---|---|---|---|---|
| | CONCENTRATION | 7 g pour 100g $Al_2O_3$ | 10 g pour 100g $Al_2O_3$ | 6 g pour 100 g $Al_2O_3$ |
| CARACTERISTIQUES DES BILLES OBTENUES | DRT ($g/cm^3$) | 0,49 | 0,50 | 0,50 |
| | VPT ($cm^3/g$) | 0,91 | 0,89 | 0,89 |
| | REP< 100 $10^{-10}$m | 0,03 | 0,04 | 0,04 |
| | 100 - 1000 $10^{-10}$m | 0,48 | 0,49 | 0,48 |
| | 1000 - 5000 $10^{-10}$m | 0,16 | 0,07 | 0,08 |
| | 5000 - 10000 $10^{-10}$m | 0,13 | 0,08 | 0,08 |
| | > 10000 $10^{-10}$m | 0,10 | 0,21 | 0,21 |
| | SBE ($m^2g^{-1}$) | 103 | 95 | 92 |
| | EGG (kg) | 3,2 | 3,1 | 3,0 |
| | RA (%) | 98,1 | 98,0 | 97,5 |
| | TT 982°C SBE($m^2g^{-1}$) | 54 | 47 | 45 |
| | EGG (kg) | 2,8 | 2,6 | 2,5 |
| | RA (%) | 97,7 | 97,5 | 97,2 |
| | Rt (%) | 1,5 | 2,1 | 2,3 |
| | TT1093°C SBE($m^2g^{-1}$) | 47 | 44 | 43 |
| | EGG (kg) | 2,5 | 2,2 | 2,1 |
| | RA (%) | 97,2 | 97,1 | 96,9 |
| | $TTH_2O$,900°C SBE($m^2g^{-1}$) | 49 | 49 | 48 |
| | EGG (kg) | 2,9 | 2,9 | 2,7 |
| | RA (%) | 97,9 | 97,8 | 97,1 |

Si l'on compare les caractéristiques des billes d'alumine obtenues selon les exemples 1 et 2 avec celles obtenues selon cet exemple comparatif, on constate que les billes obtenues selon les procédés de l'art antérieur ne présentent pas des qualités mécaniques, thermiques et hydrothermiques exceptionnelles, de plus ces procédés ne permettent pas d'augmenter le volume poreux total et le volume poreux correspondant aux pores de diamètre compris entre 100 et 1 000 $10^{-10}$ m dans des proportions intéressantes.

En outre, les procédés de l'art antérieur, bien que conduisant à des billes possèdant un VPT inférieur au VPT obtenu par le procédé selon l'invention, possèdent une résistance mécanique (EGG) beaucoup plus faible.

**Revendications**

1. Procédé de préparation d'agglomérés d'alumine comprenant les étapes suivantes :

a) On traite des agglomérés d'alumine active dans un milieu aqueux constitué d'un mélange d'au moins un acide permettant de dissoudre au moins une partie de l'alumine des agglomérés et d'au moins un composé apportant un anion capable de se combiner avec les ions aluminium en solution ;

b) On soumet simultanément ou subséquemment les agglomérés ainsi traités à un traitement à une température comprise entre 80 °C et 250 °C pendant une période comprise entre quelques minutes et 36 h ;

c) On sèche éventuellement les agglomérés et on les soumet à une activation thermique à une température comprise entre environ 500 °C et environ 1 100 °C ;

caractérisé en ce que l'acide dissout au moins 0,5 % et au plus 15 % en poids d'alumine des agglomérés, l'acide étant choisi parmi les acides forts ou les acides faibles, sa concentration dans le milieu aqueux de traitement étant inférieur à 20 % en poids et de préférence comprise entre 1 % et 15 % et en ce que le composé apportant un anion $A^{-n}$ forme avec les ions aluminium $Al^{3+}$ en solution des produits dans lesquels le rapport atomique $n(A/Al) \leqslant 3$, la concentration de ce composé dans le milieu aqueux de traitement est inférieur à 50 % en poids et de préférence comprise entre 3 % et 30 %.

2. Procédé selon la revendication 1 caractérisé en ce que l'acide est choisi parmi le groupe comportant : l'acide nitrique, l'acide chlorhydrique, l'acide perchlorique, l'acide sulfurique.

3. Procédé selon la revendication 1 caractérisé en ce que les composés comportent les anions choisis parmi le groupe constitué par les anions nitrate, chlorure, sulfate, perchlorate, chloroacétate, dichloracétate, trichloracétate, bromoacétate, dibromoacétate et les anions de formule générale

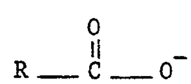

dans laquelle R représente un radical pris dans le groupe comprenant H, $CH_3$, $C_2H_5$, $CH_3CH_2CH_2$, $(CH_3)_2CH$.

4. Procédé selon les revendications 1 ou 3 caractérisé en ce que les composés sont choisis parmi le groupe comportant les acides minéraux ou organiques, les anhydrides, les sels minéraux ou organiques, les esters.

5. Procédé selon la revendication 4 caractérisé en ce que les composés sont choisis parmi le groupe constitué par les sels de sodium, potassium, ammonium, aluminium, magnésium, calcium, terres rares.

6. Procédé selon la revendication 1 caractérisé en ce que le traitement b) est effectué à une température comprise entre 120 et 220 °C pendant une période de temps comprise entre 15 minutes et 18 heures.

**Claims**

1. Process for preparing alumina pellets, comprising the following steps :

a) activated alumina pellets are treated in an aqueous medium consisting of a mixture of at least one acide making it possible to dissolve at least a part of the alumina of the pellets and at least one compound providing an anion capable of combining with aluminium ions in solution ;

b) the pellets treated in this way are simultaneously or subsequently subjected to a treatment at a temperature of between 80 °C and 250 °C for a period of between a few minutes and 36 hours ;

c) the pellets are, if appropriate, dried and subjected to thermal activation at a temperature of between approximately 500 °C and approximately 1,100 °C ; and at most 15 % by weight of alumina of the pellets, the acid being chosen from among the strong acids or the weak acids, its concentration in the aqueous treatment medium being below 20 % by weight and preferably between 1 % and 15 % and the compound providing an anion $A^{-n}$ forms with the aluminium ions $Al^{3+}$ in solutions products in which the atomic ratio $n(A/Al) \leqslant 3$, and the concentration of this compound in the aqueous treatment medium is below 50 % by weight and preferably between 3 % and 30 %.

2. Process according to Claim 1, characterised in that the acid is chosen from the group which includes : nitric acid, hydrochloric acid, perchloric acid and sulphuric acid.

3. Process according to Claim 1, characterised in that compounds include the anions chosen from the group consisting of the nitrate, chloride, sulphate, perchlorate, chloroacetate, dichloroacetate, trichloroacetate, bromoacetate, and dibromoacetate anions and the anions of the general formula

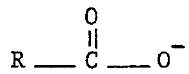

in which R denotes a radical taken from the group including H, $CH_3$, $C_2H_5$, $CH_3CH_2CH_2$, $(CH_3)_2CH$.

4. Process according to Claims 1 or 3, characterised in that the compounds are chosen from the group including inorganic or organic acids, anhydrides, inorganic or organic salts, and esters.

5. Process according to Claim 4, characterised in that the compounds are chosen from the group consisting of the salts of sodium, potassium, ammonium, aluminium, magnesium, calcium, and the rare earths.

6. Process according to Claim 1, characterised in that the treatment b) is carried out at a temperature of between 120 and 220 °C, for a period of time of between 15 minutes and 18 hours.

**Ansprüche**

1. Verfahren zur Herstellung von Aluminiumoxid-Agglomeraten mit den folgenden Stufen :

a) Agglomerate von aktivem Aluminiumoxid werden in wässrigem Milieu behandelt, das aus einer Mischung von mindestens einer Säure, die wenigstens einen Teil des Aluminiumoxids der Agglomerate aufzulösen imstande ist, und mindestens einer Verbindung besteht, die ein Anion enthält, das sich mit den gelösten Aluminiumionen verbinden kann ;

b) gleichzeitig oder anschließend werden die so behandelten Agglomerate einer Behandlung bei einer Temperatur zwischen 80 °C und 250 °C während eines Zeitraums von einigen Minuten bis 36 Stunden unterworfen ;

c) Die Agglomerate werden einer thermischen Aktivierung bei einer Temperatur zwischen etwa 500 °C und etwa 1 100 °C unterworten, nachdem sie gegebenenfalls getrocknet wurden ;

dadurch gekennzeichnet, daß die Säure mindestens 0,5 % und höchstens 15 Gewichtsprozent des Aluminiumoxids der Agglomerate löst, wobei die Säure unter den starken oder den schwachen Säuren gewählt wird und ihre Konzentration in dem wässrigen Behandlungsmilieu unter 20 Gewichtsprozent, vorzugsweise zwischen 1 und 15 Gewichtsprozent, liegt, und dadurch, daß die Verbindung, die das Anion $A^{-n}$ enthält, mit den Aluminium-Ionen $Al^{3+}$ in Lösung Produkte bildet, bei denen das Atomverhältnis $n(A/Al) \leq 3$ ist, und die Konzentration dieser Verbindung in wässrigem Behandlungsmilieu unter 50 Gewichtsprozent liegt.

2. Verfahren nach Anspruch 1, dadurch gekennzeichnet, daß die Säure aus der Gruppe von Salpetersäure, Chlorwasserstoffsäure, Perchlorsäure und Schwefelsäure gewählt wird.

3. Verfahren nach Anspruch 1, dadurch gekennzeichnet, daß die Verbindungen Anionen enthalten, die aus der Gruppe der Nitrat-, Chlorid-, Sulfat-, Perchlorat-, Chloracetat-, Dichloracetat-, Trichloracetat-, Bromacetat-, Dibromacetat-Anionen und den Anionen der allgemeinen Formel

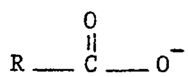

gewählt werden, in der R ein Rest aus der Gruppe von H, $CH_3$, $C_2H_5$, $CH_3CH_2CH_2$, $(CH_3)_2CH$ ist.

4. Verfahren nach Anspruch 1 oder 3, dadurch gekennzeichnet, daß die Verbindungen aus der Gruppe der anorganischen oder organischen Säuren, der Anhydride, der anorganischen oder organischen Salze und der Ester gewählt werden.

5. Verfahren nach Anspruch 4, dadurch gekennzeichnet, daß die Verbindungen aus der Gruppe der Salze von Natrium, Kalium, Ammonium, Aluminium, Magnesium, Calcium und den Seltenen Erden gewählt werden.

6. Verfahren nach Anspruch 1, dadurch gekennzeichnet, daß die Behandlung b) bei einer Temperatur von 120 bis 220 °C während eines Zeitraums zwischen 15 Minuten und 18 Stunden durchgeführt wird.